# EUROPEAN PATENT APPLICATION

(11) **EP 4 383 062 A1**
(43) Date of publication of application: **12.06.2024**
(21) Application number: 23213890.9
(22) Date of filing: 04.12.2023
(51) Int. Cl.: G06F 7/483

(54) **APPARATUS AND METHOD WITH DATA PROCESSING**

(30) Priority: 06.12.2022 KR 20220168833
(71) Applicant: Samsung Electronics Co., Ltd., Suwon-si, Gyeonggi-do 16677 (KR)
(72) Inventor: Sim, Hyeonuk, 16678 Suwon-si, Gyeonggi-do (KR)
(74) Representative: Grünecker Patent- und Rechtsanwälte PartG mbB

(57) **Abstract**

A computing apparatus include a processing circuitry configured to detect a weight depth field, related to a range of a weight value of a plurality of weight values, within the weight value, and detect an activation depth field, related to a range of an activation value of a plurality of activation values, within the activation value; identify a first operand in the weight value, and identify a second operand in the activation value; and generate an output value having a resultant depth field determined based on the weight depth field and the activation depth field, by performing an operation based on the detected first and second operands.

## Description

### BACKGROUND

### 1. Field

The disclosure relates to an apparatus and method with data processing.

### 2. Description of Related Art

Deep learning models or accelerators are computational complex. Deep learning models and accelerators utilize fixed-point and/or floating-point number formats for activations, weights, and gradients for training and inference operations, and may achieve faster training and reduced power consumption for deep learning models for image classification and data processing.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is claimed in the independent claims. Preferred embodiments are specified in the dependent claims.

In one general aspect, a computing apparatus may include a processing circuitry configured to detect a weight depth field, related to a range of a weight value of a plurality of weight values, within the weight value, and detect an activation depth field, related to a range of an activation value of a plurality of activation values, within the activation value; identify a first operand in the weight value, and identify a second operand in the activation value; and generate an output value having a resultant depth field determined based on the weight depth field and the activation depth field, by performing an operation based on the identified first and second operands.

The computing apparatus may further include a first buffer configured to store the weight value; and a second buffer configured to store the activation value; wherein the processing circuitry may include a first depth field detector configured to: detect, in a direction toward a least significant bit (LSB) of the weight value, a first target bit, among bits of the weight value after a most significant bit (MSB) of the weight value, that is first to have a first value; and determine bits from a second MSB of the weight value through the first target bit to be the weight depth field; and a second depth field detector configured to: detect, in a direction toward a least significant bit (LSB) of the activation value, a second target bit, among bits of the activation value after a most significant bit (MSB) of the activation value, that is first to have the first value, and determine bits from a second MSB of the activation value through the second target bit to be the activation depth field.

The processing circuitry may include a first depth field detector configured to: detect a first target bit, among bits of the weight value after a most significant bit (MSB) and a second MSB of the weight value, that is first to have a first value, and determine bits from the second MSB of the weight value through the first target bit to be the weight depth field; and a second depth field detector configured to detect, in a direction toward a least significant bit (LSB) of the activation value, a second target bit, among bits of the activation value after a most significant bit (MSB) and a second MSB of the activation value, that is first to have the first value; and determine bits from the second MSB of the activation value through the second target bit to be the activation depth field.

The processing circuitry may include a first bit check circuit configured to determine whether a bit next, in the direction toward the LSB of the weight value, to the first target bit of the weight value has the first value; and a first masking circuit configured to when the next bit has the first value, change a value of the first target bit from the first value to a second value and identify the first operand as comprising the first target bit having the second value, the next bit, and a bit following the next bit; and when the next bit has the second value, change a value of the next bit from the second value to the first value, change the value of the first target bit from the first value to the second value, and identify the first operand as comprising the first target bit having the second value, the next bit having the first value, and a bit following the next bit.

The processing circuitry may include a second bit check circuit configured to determine whether a bit next, in the direction toward the LSB of the activation value, to the second target bit of the activation value has the first value; and a second masking circuit configured to: when the next bit has the first value, change a value of the second target bit from the first value to a second value and identify the second operand comprising the second target bit having the second value, the next bit, and a bit following the next bit; and when the next bit has the second value, change a value of the next bit from the second value to the first value, change the value of the second target bit from the first value to the second value, and identify the second operand comprising the second target bit having the second value, the next bit having the first value, and a bit following the next bit.

The processing circuitry is further configured to generate respective conversion values corresponding to the detected weight and activation depth fields, sum the generated respective conversion values, and determine the resultant depth field of the output data using a result of the summing.

The processing circuitry may include a shift circuit configured to perform a 2-bit shift on the result of the operation when each of a leading bit in a mantissa field of the weight value and a leading bit in a mantissa field of the activation value has a second value; perform a 1-bit shift on the result of the operation when one of the leading bit in the mantissa field of the weight value and the leading bit in the mantissa field of the activation value has the second value and the other one has the first value, and skip a shift on the result of the operation when each of the leading bit in the mantissa field of the weight value and the leading bit in the mantissa field of the activation value has the first value.

The processing circuitry may include an encoder configured to extract a portion of bits from the result of the operation, and generate the output data using the extracted portion of bits, the resultant depth field, a sign bit of the weight value, and a sign bit of the activation value.

The weight value and the activation value may each have a first number format, and wherein the computing apparatus further may include a number format converter configured to convert a raw weight value of a number format other than the first number format and a raw activation value of the number format other than the first number format, or of another number format, to the weight value of the first number format and the activation value of the first number format, respectively.

The number format converter may be further configured to detect the weight depth field of the weight value based on an exponent value of the raw weight value and a preset factor, determine a bit corresponding to a first remainder derived through a division operation between the exponent value of the raw weight value and the preset factor, and determine a mantissa field of the weight value through the bit corresponding to the first remainder and a portion of bits of mantissa bits of the raw weight value; and detect the activation depth field of the activation value based on an exponent value of the raw activation value and a preset factor, determine a bit corresponding to a second remainder derived through a division operation between the exponent value of the raw activation value and the preset factor, and determine a mantissa field of the activation value through the bit corresponding to the second remainder and a portion of bits of mantissa bits of the raw activation value.

In another general aspect, a computing apparatus may include an processing circuitry configured to detect a weight depth field, related to a range of a weight value of a plurality of weight values, within the weight value; identify an operand in the weight value; perform an operation based on the identified operand and a mantissa of an activation value of a plurality of activation values, generate an exponent of output data based on the detected weight depth field, a base value of the weight value, an exponent of the activation value, and a shift value for shifting a result of the operation; and generate the output data based on the generated exponent and the result of the operation.

The processing circuitry may include a depth field detector configured to detect, in a direction toward a least significant bit (LSB) of the weight value, a target bit, among bits of the weight value after a most significant bit (MSB) and a second MSB of the weight value, that is first to have a first value, and determine bits from the second MSB through the target bit to be the weight depth field.

The depth field detector may be further configured to determine the second MSB as the weight depth field when the second MSB first has the first value.

The processing circuitry may include a bit check circuit configured to determine whether a bit next, in the direction toward LSB of the weight value, to the target bit of the weight value has the first value; and a masking circuit configured to when the next bit has the first value, change a value of the target bit from the first value to a second value and identify the operand as comprising the target bit having the second value, the next bit, and a bit following the next bit; and when the next bit has the second value, change a value of the next bit from the second value to the first value, change the value of the target bit from the first value to the second value, and identify the operand as comprising the target bit having the second value, the next bit having the first value, and a bit following the next bit.

The processing circuity may be further configured to generate a conversion value corresponding to the detected weight depth field, and generate the exponent of the output data using the generated conversion value, k which is an exponent when the base value is expressed as a power of 2, a value generated according to a leading bit of a mantissa field of the weight value, the shift value, and an exponent of the activation value.

The processing circuitry may be further configured to apply a sign of the exponent of the activation value to a result of multiplication between the generated conversion value and k, and generate the exponent of the output data by summing the multiplication result with the sign applied, the exponent of the activation value, the value generated according to the leading bit, and the shift value.

The value generated according to the leading bit corresponds to "-1" when the leading bit has a second value, and the value generated according to the leading bit corresponds to "0" when the leading bit has the first value.

The processing circuitry may be further configured to extract a portion of bits from the result of the operation, and generate the output data using the extracted portion of bits and the generated exponent.

In another general aspect, a processor-implemented method may include detecting a weight depth field, related to a range of a weight value of a plurality of weight values, within the weight value, detecting an activation depth field, related to a range of an activation value of a plurality of activation values, within the activation value; identifying a first operand in the weight value, and identifying a second operand in the activation value; and generating an output value having resultant depth field determined on the weight depth field and the activation depth field, by performing an operation based on the determined first and second operands.

The detecting of the weight depth field may include detecting bits, from a second most significant bit (MSB) of the weight value through a bit that is first to have a first value, as the weight depth field of the weight value, and wherein the detecting of the activation depth field may include detecting bits from a second MSB of the activation value through a bit that is first to have the first value, as the activation depth field of the activation value.

Other features and aspects will be apparent from the following detailed description, the drawings, and the claims.

### BRIEF DESCRIPTION OF THE DRAWINGS

FIG. 1 illustrates an example computing apparatus according to one or more embodiments.
FIG. 2 illustrates an example number format according to one or more embodiments.
FIGS. 3 and 4 illustrate an example method of mapping a first number format and a second number format according to one or more embodiments.
FIGS. 5A and 5B illustrate an example operator in a computing apparatus according to one or more embodiments.
FIG. 6 illustrates an example operator in a computing apparatus according to one or more embodiments.
FIG. 7 illustrates an example method of performing an operation based on a weight value of a first number format and an activation value of the first number format by a computing apparatus according to one or more embodiments.
FIG. 8 illustrates an example method of performing an operation based on a weight value of a first number format and an activation value of a second number format by a computing apparatus according to one or more embodiments.
FIG. 9 illustrates an example computing apparatus configured to convert number format according to one or more embodiments.
FIG. 10 illustrates an example processing system according to one or more embodiments.

Throughout the drawings and the detailed description, unless otherwise described or provided, the same drawing reference numerals may be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment, e.g., as to what an example or embodiment may include or implement, means that at least one example or embodiment exists where such a feature is included or implemented, while all examples are not limited thereto.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C', and the like are intended to have disjunctive meanings, and these phrases "at least one of A, B, and C", "at least one of A, B, or C', and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing. It is to be understood that if a component (e.g., a first component) is referred to, with or without the term "operatively" or "communicatively," as "coupled with," "coupled to," "connected with," or "connected to" another component (e.g., a second component), it means that the component may be coupled with the other component directly (e.g., by wire), wirelessly, or via a third component.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein.

Existing fixed-point number formats have a narrow range of representing values. For example, if the fractional part is 7 bits long, a fixed-point number format may represent a value of at least 2⁻⁷(= 1/128).

In a floating-point number format, the length of an exponent is fixed. Accordingly, for the same total bitwidth (or the same number of bits), the floating-point number format represents less mantissa bits than the fixed-point number format.

For example, some typical deep learning accelerators may use a 32-bit floating-point number format, but it is found herein that if smaller bitwidth is used to accelerate a large amount of computation in an embedded/mobile environment, accuracy of the maching learning models may degrade. For example, graphic processing units (GPUs) for high-performance workstations may support an 8-bit fixed-point number format, e.g., by quantizing the 32-bit floating-point number to 8-bit, but such substantial quantization may result in such degraded accuracy.

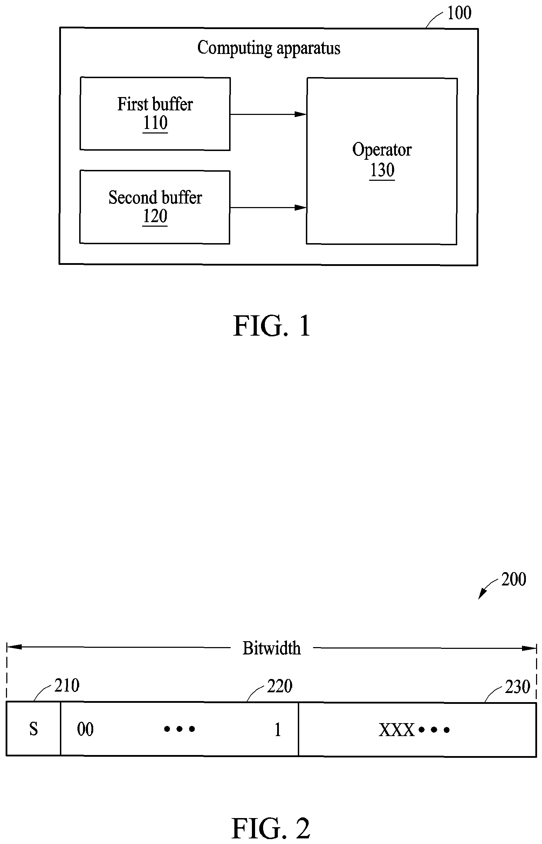

FIG. 1 illustrates an example computing apparatus according to one or more embodiments.

Referring to FIG. 1, an example computing apparatus 100 may include a first buffer 110, a second buffer 120, and an operator (or a processing circuitry) 130.

The computing apparatus 100 may correspond to a deep learning accelerator (e.g., a neural processor). Though examples are not limited thereto.

The operator 130 may also be referred to as an operational circuit.

The first buffer 110 may be configured to store weight values. A number format of the weight values may be a first number format which will be described with reference to FIG. 2 or a second number format. The first number format may be a number format according to one or more embodiments, and the second number format may be a floating-point format.

The second buffer 120 may be configured to store activation values. These activation values may correspond to an input feature map. The activation values may be in the first number format or the second number format.

The operator 130 may generate (or determine) an output feature map by performing an operation based on the input feature map and the weight values.

The operator 130 may receive a weight value from the first buffer 110 and an activation value from the second buffer 120.

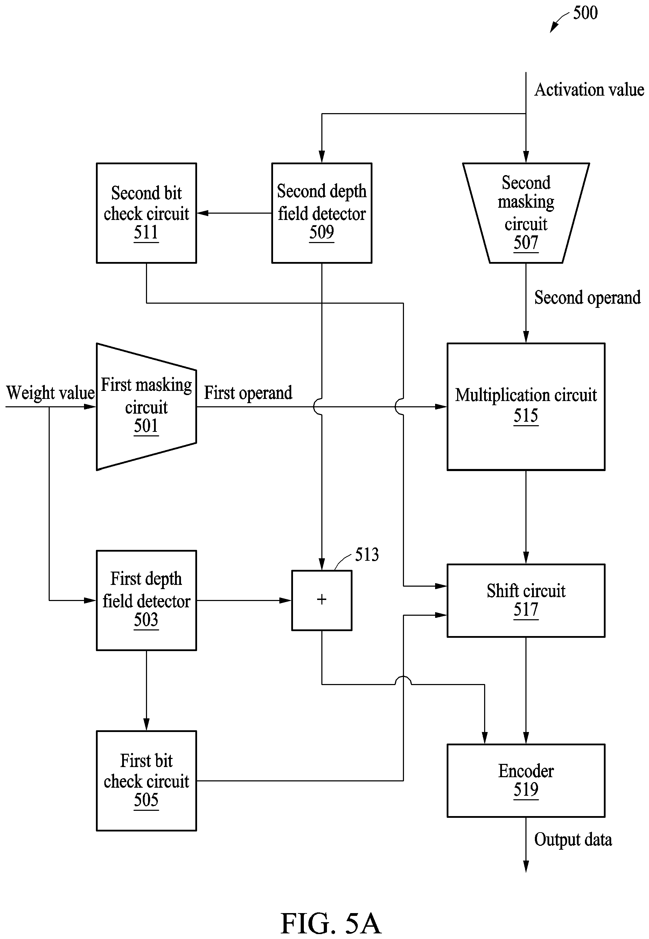

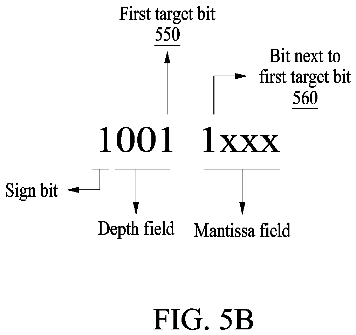

Each of the received weight value and the received activation value may have, for example, the first number format. In one example, the operator 130 may detect a depth field (or a depth bit) related to a range of the received weight value from the received weight value, and a depth field (or a depth bit) related to a range of the received activation value from the received activation value. The operator 130 may determine an exponent of output data based on the detected depth fields. The operator 130 may determine a first operand by processing the received weight value, and determine a second operand by processing the received activation value. The operator 130 may perform an operation (e.g., a binary multiplication operation) based on the determined first and second operands, and determine the output data based on a result of the operation and the determined exponent. When each of the received weight value and the received activation value are in the first number format, the operation of the operator 130 will be described later with reference to FIGS. 5A and 5B.

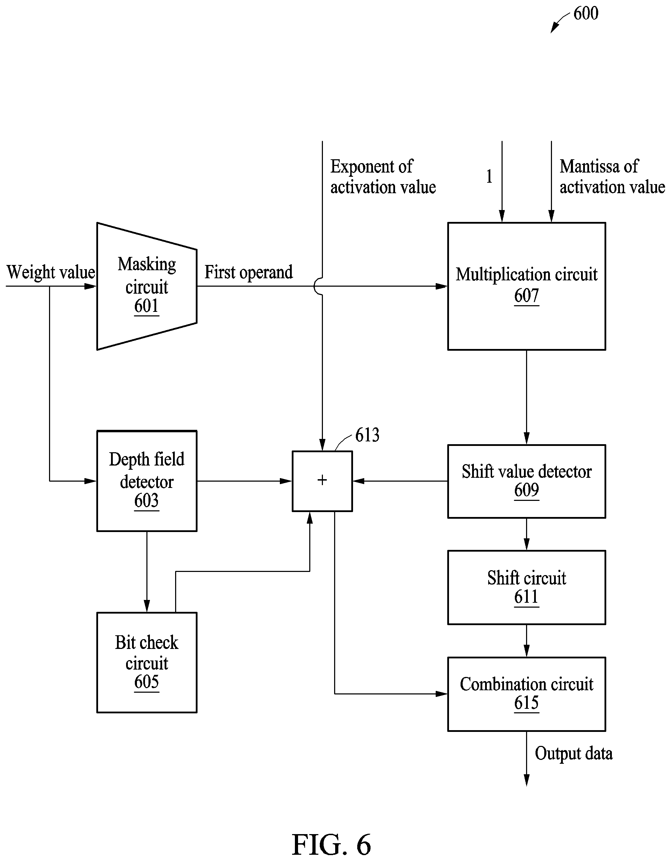

In one example, the received weight value may have the first number format, and the received activation value may have the second number format. Thus, the operator 130 may detect the depth field related to the range of the received weight value from the received weight value, and determine an operand by processing the received weight value. The operator 130 may perform an operation (e.g., a binary multiplication operation) based on the determined operand and a mantissa of the received activation value. The operator 130 may determine an exponent of the output data based on the detected depth field, a base value of the received weight value, an exponent of the received activation value, and a shift value for shifting the result of the operation. The operator 130 may determine the output data based on the determined exponent and the result of the operation. When the received weight value is in the first number format and the received activation value is in the second number format, the operation of the operator 130 will be described later with reference to FIG. 6.

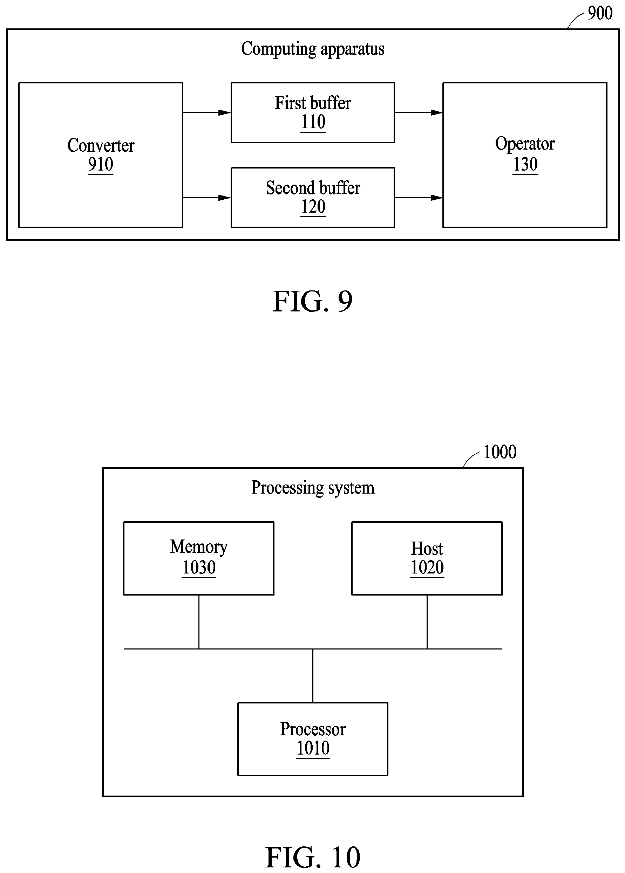

The first number format may have a bitwidth smaller than the bitwidth of a number format (e.g., the floating-point format, etc.) used in an existing deep learning accelerator. Accordingly, the size of the first buffer 110 may be smaller than the size of an existing buffer storing weight values of the floating-point format. The size of the second buffer 120 may be smaller than the size of an existing buffer storing activation values of the floating-point format. Since the amount of data that the computing apparatus 100 retrieves from an external memory (e.g., a memory 930 to be described later through FIG. 9) may be smaller than the amount of data that the existing deep learning accelerator retrieves from the external memory, the computing apparatus 100 may perform an operation at a higher rate than the existing deep learning accelerator.

FIG. 2 illustrates an example first number format according to one or more embodiments.

Referring to FIG. 2, an example first number format 200 may include a sign bit 210, a depth field (or depth bit) 220, and a mantissa field (or mantissa bit) 230.

The sign bit 210 may be a first value (e.g., "1") or a second value (e.g., "0"). When the sign bit 210 is "1", the value of the first number format 200 may be a negative number, and when the sign bit 210 is "0", the value of the first number format 200 may be a positive number.

The sign bit 210 may be a most significant bit (MSB) of the first number format 200. A bit furthest to the right may be called a least significant bit (LSB).

The depth field 220 may be a field related to a range of the value of the first (i.e., in the direction of MSB to LSB) number format 200. In the first number format 200, bits from a second MSB to a bit that first is (i.e., has a value of) "1", excluding the sign bit 210, may correspond to the depth field 220. A depth value *d* may indicate the number of bits of the depth field 220 or the bitwidth of the depth field 220.

The mantissa field 230 may be a field representing the value of the first number format 200. In the first number format 200, the remaining portion excluding the sign bit 210 and the depth field 220 may be the mantissa field 230.

For example, if a memory (e.g., the first buffer 110) stores a value "1001xxxx" having the first number format 200, and a fourth bit first is "1" except for the MSB, bits "001" include the second MSB (i.e., the first bit of "001") with a value of "0", the fourth bit (i.e., the only bit of "001" that has a value of "1"), and remaining bit(s) of value "0" therebetween. Thus, in this example, the bits "001" correspond to a depth field within "1001xxxx", meaning that in this example, the depth value d is "3", the total number of bits of the depth field. Further, within "1001xxxx" of the first number format 200, "xxxx" may be a mantissa field representing the value of this example "1001xxxx". For another example, if a memory (e.g., the first buffer 110) stores a value "01001xxx" having the first number format 200, a second bit (i.e., a second MSB) first is "1", meaning that the depth field of "01001xxx" is only a single bit, so the depth value d is "1". In the example value "01001xxx", the remaining bits "001xxx" after the depth field may be a mantissa field representing the value of this example "01001xxx".

The bitwidth of the first number format 200 may be the sum of the number of sign bits 210, the number of bits (or depth value) of the depth field 220, and the number of bits of the mantissa field 230. For a given bitwidth, the depth field 220 and the mantissa field 230 may vary as described above as non-limiting examples.

In an example, a base value and/or a scale value may be defined in the first number format 200.

The base value may be a value related to a representable range of the value of the first number format 200. As the base value increases, the first number format 200 may represent a wider range of values. For example, the first number format 200 may basically represent a fractional part that is less than "1", and as the base value increases, the first number format 200 may represent a wider range of fractional parts (r). Also, according to the base value and the depth value d, the range of the fractional part may be determined as base^{1-d} > r ≥ base^{-d}. When the base value is expressed as 2^{k}, the range of the fractional part may be expressed as 2^{k(1-d)} > r ≥ 2^{-kd}. For example, when the base value is "4" (i.e., k=2) and the depth value is "2", the first number format 200 may represent a range of 2⁻² to 2⁻⁴. The range of the fractional part r may be 2⁻² > r ≥ 2⁻⁴. When the base value is "8" (i.e., k=3) and the depth value is "2", the first number format 200 may represent a range of 2⁻³ to 2⁻⁶. The range of the fractional part r may be 2⁻³ > r ≥ 2⁻⁶. For the same depth value, as the base value increases, the first number format 200 may represent a value more precisely and widely.

The scale value may be set so that the first number format 200 may represent a value that is greater than or equal to "1". For example, when the first number format 200 represents a fractional part that is less than "1", the scale value may be applied to the fractional part that is less than "1", thereby the first number format 200 may represent a value that is greater than or equal to "1".

According to an example, when the first number format 200, the fixed-point, and the floating-point have the same bitwidth, the first number format 200 may represent a wider range than the fixed-point and more mantissa bits than the floating-point. In addition, when trying to represent a large value (e.g., a value close to "1") with the same bitwidth, the first number format 200 may represent more mantissa bits than the fixed-point, and the number of bits of the mantissa (or mantissa field) may not be fixed but be variable. Accordingly, in a predetermined range (e.g., a range of an arbitrary value close to "1 "), the first number format 200 may represent the mantissa larger than the floating-point may represent.

Hereinafter, a description will be provided by omitting the sign bit 210, and the number format without the sign bit 210 may be referred to as an "unsigned first number format".

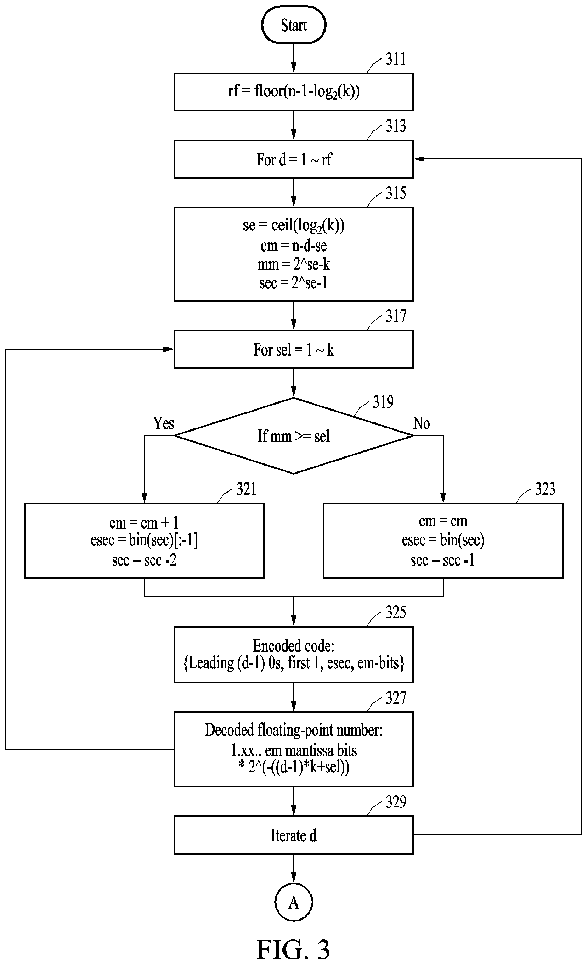

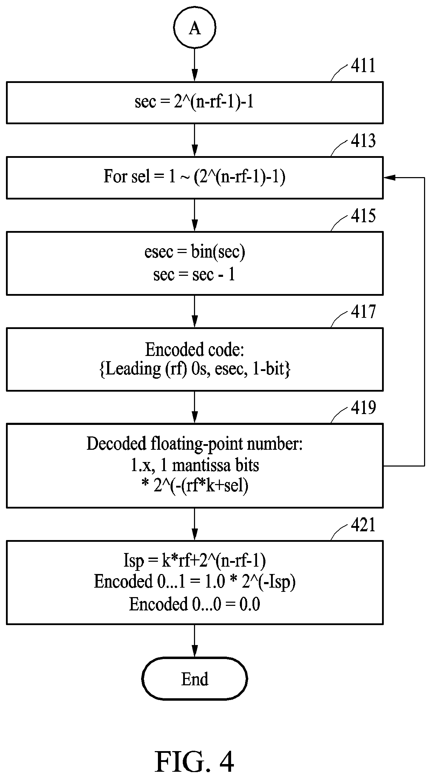

FIGS. 3 and 4 illustrate an example method of mapping a first number format and a second number format according to one or more embodiments.

In the example shown in FIGS. 3 and 4, a base value may be 2^{k}, and a bitwidth of an unsigned first number format may be *n* bits, which means the unsigned first number format is *n* bits long.

In operation 311, the computing apparatus 100 may determine a regular field width *rf* based on *k* and *n.* The computing apparatus 100 may determine *rf* according to *rf* = *floor*(*n* - 1 - log₂*k*), wherein *floor*() denotes a rounding down function. For example, when *k*=2 and *n*=7, the computing apparatus 100 may determine *rf*=5.

In operation 313, the computing apparatus 100 may set a depth value *d* in the range of 1 to *rf.* For example, the computing apparatus 100 may set *d*=1, and if there is an instruction to iterate *d* in operation 329, may set *d*=2. The computing apparatus 100 may iteratively perform operations 315, 317, 319, 321 (or 323), 325, and 327 from d=1 to *d*=*rf.*

In operation 315, the computing apparatus 100 may determine several variables (e.g., sub-exponent bits se, common mantissa bits *cm,* mantissa modulo *mm,* and a sub-exponent code *sec*). The computing apparatus 100 may determine se according to *se* = *ceil*(log₂ *k*)*,* determine *cm* according to *cm* = *n* - *d* - *se*, determine *mm* according to *mm* = 2*^{se}* - *k,* and determine see according to see = *2^{se}* - 1, wherein *ceil*() denotes a rounding up function. For example, provided *n*=7*, k*=2 and *d*=1, the computing apparatus 100 may determine se=1, *mm=0,* and *sec*=1. Since *cm*=5, the computing apparatus 100 may determine *cm*=xxxxx.

In operation 317, the computing apparatus 100 may set a sub-exponent level *sel* in the range of 1 to *k*. For example, provided *k*=2, the computing apparatus 100 may set *sel* in the range of 1 to 2. For example, the computing apparatus may set *sel*=1, and may set *sel*=2 when operations 319, 321 (or 323), 325, and 327 are performed. The computing apparatus 100 may iteratively perform operations 319, 321 (or 323), 325, and 327 from *sel*=1 to *sel*=*k.*

In operation 319, the computing apparatus 100 may determine whether mm is greater than or equal to *sel*. If *mm* is greater than or equal to *sel*, in operation 321, the computing apparatus 100 may calculate *em* according to *em* = *cm* + 1, determine esec according to *esec* = *bin*(*sec*)[: -1], and update *sec* according to *sec* = *sec* - 2, wherein *bin*() denotes a function used to convert an integer to its binary representation. *em* may denote an effective mantissa, and *esec* may denote an effective sub-exponent code. If *mm* is less than *sel*, in operation 323, the computing apparatus 100 may determine *em* according to *em* = *cm,* determine *esec* according to *esec* = *bin*(*sec*)*,* and update see according to *sec* = *sec* - 1.

For example, if *mm*=0*, mm* is less than *sel*, and thus, in operation 323, the computing apparatus 100 may determine *em*=xxxxx, determine *esec*=bin(1)=1, and set see to "0".

In operation 325, the computing apparatus 100 may generate a binary code of the unsigned first number format by performing encoding according to a first rule {leading (*d*-1) 0s, first 1, *esec*, em-bits}. For example, provided *d*=1 and *sel*=1, esec=1 and *em*=xxxxx. In this case, the computing apparatus 100 may generate "11xxxxx" of the first number format 200 according to the first rule.

In operation 327, the computing apparatus 100 may decode (or convert) the generated binary code to a floating-point number according to a second rule {1.xx...*em*-bits* 2-^{((*d*-1)**k*+*sel*)}}. For example, the computing apparatus 100 may convert "11xxxxx" to 1.xxxxx*2⁻¹ since "xxxxx" in "11xxxxx" is em bits long, and *k*=2*, d*=1, and *sel*=1. For reference, "*" denotes a multiplication sign.

The computing apparatus 100 may return to operation 317 and set *sel*=2, and may iterate operations 319, 323, 325, and 327. Through this iteration, the computing apparatus 100 may generate "10xxxxx" of the unsigned first number format, and convert the generated "10xxxxx" to 1.xxxxx*2⁻² of the floating-point format.

In *sel*=*k,* when the computing apparatus 100 iteratively performs operations 319, 321 (or 323), 325, and 327, it may be determined to iterate d in operation 329.

The computing apparatus 100 may return to operation 313 and set *d*=2.

When *d*=2, the computing apparatus 100 may iterate operations 315, 317, 319, 321 (or 323), 325, and 327. By the iterating of these operations, the computing apparatus 100 may generate "011xxxx" of the first number format 200 and convert "011xxxx" of the first number format 200 to 1.xxxx*2⁻³ of the floating-point format, and generate "010xxxx" of the first number format 200 and convert "010xxxx" of the first number format 200 to 1.xxxx*2⁻⁴ of the floating-point format.

In *d*=*rf,* when the computing apparatus 100 iteratively performs operations 315, 317, 319, 321 (or 323), 325, and 327, operation 411 of FIG. 4 may be performed.

Referring to FIG. 4, in operation 411, the computing apparatus 100 may initialize *sec*. The computing apparatus 100 may initialize see according to *sec*=2^{*n*-*rf*-1}-1. For example, provided *n*=7 and *rf*=5, the computing apparatus 100 may initialize to sec=1.

In operation 413, the computing apparatus 100 may set *sel* in the range of 1 to (2^{*n*-*rf*-1}-1). The computing apparatus 100 may set *sel*=1. Since 2^{*n*-*rf*-1}-1 is calculated as "1" when n=7 and *rf*=5, *sel* may be set only to "1" when *n*=7 and *rf*=5.

In operation 415, the computing apparatus 100 may determine esec and update *sec*. The computing apparatus 100 may determine esec according to *esec* = *bin*(*sec*) and update see according to *sec* = *sec* - 1. For example, the computing apparatus 100 may determine esec=bin(1)=1 and update see to "0".

In operation 417, the computing apparatus 100 may generate a binary code of the unsigned first number format by performing encoding according to a third rule {leading (*rf*) 0s, *esec,* 1-mantissa bit}. For example, provided *rf*=5 and esec=1, the computing apparatus 100 may generate "000001x" of the first number format 200.

In operation 419, the computing apparatus 100 may decode (or convert) the generated binary code to a floating-point number according to a fourth rule {1.x...1-mantissa bits* *2*^{*-*(*rf*k* + *sel*)}}. For example, the computing apparatus 100 may convert "000001x" of the first number format 200 to 1.x*2⁻¹¹ according to the fourth rule.

The computing apparatus 100 may set sel=2 in operation 413 and may iterate operations 415 through 419. Since 2^{*n*-*rf*-1}-1 is calculated as "1" when *n*=7 and *rf*=5, *sel* may be set only to "1" when n=7 and *rf*=5. In this case, the computing apparatus 100 may not iterate operations 415 through 419.

When the iteration of *sel* is completed, the computing apparatus 100 may calculate a least significant position *Isp* in operation 421. The computing apparatus 100 may calculate *Isp* according to *Isp* = *k* * *rf* + 2^{*n*-*rf*-1}. For example, when *k*=2*, n*=7*,* and *rf*=5, the computing apparatus 100 may calculate Isp=12.

In operation 421, the computing apparatus 100 may convert "0000001" of the unsigned first number format to 1.0*2^{-lsp}, and convert "0000000" of the unsigned first number format to 0.0.

Table 1 below shows examples of the unsigned first number format when *k*=2 and *n=7,* the second number format to which the first number format is converted, and the third number format (e.g., the fixed-point).

**Table 1**

| Unsigned first number format | Second number format | Third number format |
|---|---|---|
| 11xxxxx | 1.xxxxx...*2⁻¹ | 0.1xxxxx... |
| 10xxxxx | 1.xxxxx... *2⁻² | 0.01xxxxx... |
| 011xxxx | 1.xxxx...*2⁻³ | 0.001xxxx... |
| 010xxxx | 1.xxxx...*2⁻⁴ | 0.0001xxxx... |
| 0011xxx | 1.xxx...*2⁻⁵ | 0.00001xxx... |
| 0010xxx | 1.xxx...*2⁻⁶ | 0.000001xxx... |
| 00011xx | 1.xx...*2⁻⁷ | 0.0000001xx... |
| 00010xx | 1.xx...*2⁻⁸ | 0.00000001xx... |
| 000011x | 1.x...*2⁻⁹ | 0.000000001x... |
| 000010x | 1.x...*2⁻¹⁰ | 0.0000000001x... |
| 000001x | 1.x...*2⁻¹¹ | 0.00000000001x... |
| 0000001 | 1.0...*2⁻¹² | 0.000000000001... |
| 0000000 | 0.0...*2⁻¹² | 0.000000000000... |

In Table 1 above, 11xxxxx and 10xxxxx are binary codes generated when *d*=1, 011xxxx and 010xxxx are binary codes generated when *d*=2, and 0011xxx and 0010xxx are binary codes generated when *d*=3. 00011xx and 00010xx are binary codes generated when *d*=4, and 000011x and 000010x are binary codes generated when *d*=5. 000001x is a binary code generated through operation 417 of FIG. 4, and 0000001 and 0000000 are binary codes generated through operation 421 of FIG. 4.

In the second number format and the third number format of Table 1 above, "..." may denote zeros.

Table 2 below shows examples of the unsigned first number format when k=3 and *n*=7*,* the second number format to which the first number format is converted, and the third number format.

**Table 2**

| Unsigned first number format | Second number format | Third number format |
|---|---|---|
| 11xxxxx | 1.xxxxx...*2⁻¹ | 0. 1 xxxxx ... |
| 101xxxx | 1.xxxxx... *2⁻² | 0.01xxxxx... |
| 100xxxx | 1.xxxx...*2⁻³ | 0.001xxxx... |
| 011xxxx | 1.xxxx...*2⁻⁴ | 0.0001xxxx... |
| 0101xxx | 1.xxx...*2⁻⁵ | 0.00001xxx... |
| 0100xxx | 1.xxx...*2⁻⁶ | 0.000001xxx... |
| 0011xxx | 1.xxx...*2⁻⁷ | 0.0000001xxx... |
| 00101xx | 1.xx...*2⁻⁸ | 0.00000001xx... |
| 00100xx | 1.xx...*2⁻⁹ | 0.000000001xx... |
| 00011xx | 1.xx...*2⁻¹⁰ | 0.0000000001xx... |
| 000101x | 1.x...*2⁻¹¹ | 0.00000000001x... |
| 000100x | 1.x...*2⁻¹² | 0.000000000001x... |
| 000011x | 1.x...*2⁻¹³ | 0.0000000000001x... |
| 000010x | 1.x...*2⁻¹⁴ | 0.00000000000001x... |
| 000001x | 1.x...*2⁻¹⁵ | 0.000000000000001x... |
| 0000001 | 1.0...*2⁻¹⁶ | 0.0000000000000001... |
| 0000000 | 0.0...*2⁻¹⁶ | 0.0000000000000000... |

In the second number format and the third number format of Table 2 above, "..." may denote zeros.

In an example, the computing apparatus 100 may convert data (e.g., weight values and/or activation values) of the second number format or data of the third number format to data of the first number format 200, based on mapping relationships between the number formats (e.g., Table 1 or Table 2 above).

FIGS. 5A and 5B illustrate an example operator in a computing apparatus according to one or more embodiments.

Referring to FIG. 5A, an example operator (or an example processing circuitry) 500 may include first and second masking circuits 501 and 507, first and second depth field detectors 503 and 509, first and second bit check circuits 505 and 511, an adder 513, a multiplication circuit 515, a shift circuit 517, and an encoder 519. Respective activation value and weight value in the first number format 200 may be provided.

The operator 500 may be a non-limiting example of the operator 130 in FIG. 1.

As will be described below, each of the first and second depth field detectors 503 and 509 may each detect a corresponding bit (of the respective remaining bits) that first (i.e., in the direction of MSB to LSB) is "1", respectively, excluding each MSB from provided bits of the activation value and the weight value. Each of the first and second depth field detectors 503 and 509 may be referred to as a corresponding first 1 detector.

The operator 500 may receive the weight value of the first number format 200 from a memory (e.g., the first buffer 110 in FIG. 1). The operator 500 may transmit the weight value to the first masking circuit 501 and the first depth field detector 503.

The first depth field detector 503 may detect a bit (hereinafter, referred to as a "first target bit") that first (i.e., in the direction of MSB to LSB) is "1" in remaining bits, excluding an MSB from bits of the weight value. The first depth field detector 503 may detect bits from a second MSB of the weight value to the first target bit as a depth field of the weight value.

For example, referring to FIG. 5B, when receiving an example weight value "10011xxx" of the first number format 200, the first depth field detector 503 may detect (or determine) a first target bit in remaining bits excluding an MSB from "10011xxx". Since a second MSB (e.g., a second bit) is "0", the first depth field detector 503 may check whether a bit next to the second MSB (i.e., a third bit) is "1". Since the third bit is "0", the first depth field detector 503 may check whether a bit next to the third bit (i.e., a fourth bit) is "1". Since the fourth bit is "1", the first depth field detector 503 may detect (or determine) the fourth bit 550 as the first target bit. The first depth field detector 503 may detect (or determine) bits "001" from the second MSB through the fourth bit 550 of "10011xxx" as a depth field of the example weight value "10011xxx".

As another example, when receiving an example weight value "111xxxxx" of the first number format 200, the first depth field detector 503 may detect that a second MSB first is "1", except for an MSB, in "111xxxxx". The first depth field detector 503 may detect (or determine) the second MSB "1" of "111xxxxx" as a depth field of the example weight value "111xxxxx".

The first depth field detector 503 may determine and generate a conversion value corresponding to the depth field of the weight value. The conversion value may be, for example, an integer. Depth fields and conversion values may be previously mapped as shown in the example of Table 3 below as a non-limiting example, and the first depth field detector 503 may determine and generate the conversion value corresponding to the depth field of the weight value according to this mapping relationship.

**Table 3**

| Depth field | Conversion value |
|---|---|
| 01 | 1 |
| 001 | 2 |
| 0001 | 3 |
| ... | ... |

The mapping relationship between the depth fields and the conversion values is not limited to Table 3 above.

Hereinafter, a conversion value corresponding to a depth field of a weight value will be referred to as a "first conversion value". The first depth field detector 503 may transmit a first conversion value to the adder 513.

The first bit check circuit 505 may check the value of a bit next to the first target bit of the weight value. The first bit check circuit 505 may transmit a check result (e.g., "0" or "1") to the shift circuit 517. For example, since the fourth bit 550 of the weight value "10011xxx" is the first target bit, the first bit check circuit 505 may check the value of a bit next to the fourth bit 550 (i.e., the fifth bit 560 in FIG. 5B). The first bit check circuit 505 may check that the fifth bit 560 of "10011xxx" is "1". The first bit check circuit 505 may transmit a check result (i.e., the value of the fifth bit 560) to the shift circuit 517. Bits from the second MSB of the weight value "10011xxx" to the first target bit may correspond to the depth field, and bits from the bit 560 next to the first target bit to a least significant bit (LSB) of the weight value may correspond to the mantissa field. The first bit check circuit 505 may check the value of a leading bit of the mantissa field of the weight value (or a first bit of the mantissa field). The fifth bit 560 may be a leading bit (or a first bit) of the mantissa field of "10011xxx", and thus, the first bit check circuit 505 may check the value of the leading bit of the mantissa field of the weight value and transmit a check result to the shift circuit 517.

While FIG. 5A illustrates that the first depth field detector 503 and the first bit check circuit 505 are separated, this is merely an example, and the first depth field detector 503 and the first bit check circuit 505 may be implemented as one circuit.

The first masking circuit 501 may determine a first operand by processing the weight value. The first masking circuit 501 may receive the value of the bit next to the first target bit from the first bit check circuit 505. The first masking circuit 501 may perform masking on the first target bit when receiving "1" from the first bit check circuit 505. When receiving "0" from the first bit check circuit 505, the first masking circuit 501 may convert the bit next to the first target bit to "1" and perform masking on the first target bit. Masking may include, for example, an operation of converting the value of a bit to "0". The first masking circuit 501 may extract a predetermined number of bits (or bits at a predetermined position) from a masking result, determine the extracted bits as the first operand, and transmit the first operand to the multiplication circuit 515. The number of extracted bits may be determined according to the size of the multiplication circuit 515.

For example, since the bit 560 next to the first target bit 550 of the weight value "10011xxx" in FIG. 5B (or the leading bit of the mantissa field) is "1", the first masking circuit 501 may receive "1" from the first bit check circuit 505. The first masking circuit 501 may convert (or change) the value of the first target bit 550 from "1" to "0". When the multiplication circuit 515 is, for example, a 6-bit*6-bit binary multiplication circuit, the first masking circuit 501 may extract 6 lower bits "001xxx" including the mantissa field from the weight value "10001xxx" to which the value of the first target bit 550 is converted. The first masking circuit 501 may determine the extracted bits "001xxx" as the first operand of the multiplication circuit 515 and transmit the first operand "001xxx" to the multiplication circuit 515.

As another example weight value "000010xx", since the bit next to the first target bit of the weight value "000010xx" is "0", the first masking circuit 501 may receive "0" from the first bit check circuit 505. The first masking circuit 501 may convert the value of the bit next to the first target bit to "1" and convert the value of the first target bit from "1" to "0". When the multiplication circuit 515 is, for example, a 6-bit*6-bit binary multiplication circuit, the first masking circuit 501 may extract 6 lower bits "0001xx" including the mantissa field from the weight value "000001xx" to which the value of the bit next to the first target bit is converted. The first masking circuit 501 may determine the extracted bits "0001xx" as the first operand and transmit the first operand "0001xx" to the multiplication circuit 515.

The operator 500 may receive an example activation value of the first number format 200 from a memory (e.g., the second buffer 120 in FIG. 1). The operator 500 may transmit the activation value to the second masking circuit 507 and the second depth field detector 509.

The description of the first masking circuit 501 may apply to the second masking circuit 507, and the description of the first depth field detector 503 may apply to the second depth field detector 509.

The second masking circuit 507 may determine a second operand by processing the activation value, and transmit the second operand to the multiplication circuit 515.

The second depth field detector 509 may detect a bit (hereinafter, referred to as a "second target bit") that first is "1" in remaining bits, excluding an MSB from bits of the activation value, and detect bits from a second MSB of the activation value through the second target bit as a depth field of the activation value. For example, when receiving an example activation value "1010xxxx" of the first number format 200, the second depth field detector 509 may detect (or determine) a third bit of "1010xxxx" as the second target bit. The second depth field detector 509 may detect (or determine) bits "01" from the second MSB of "1010xxxx" through the second target bit as a depth field of "1010xxxx".

The second depth field detector 509 may determine a conversion value corresponding to the depth field of the activation value. For example, the second depth field detector 509 may determine the conversion value corresponding to the depth field of the activation value by referring to Table 3 above as a non-limiting example. Hereinafter, a conversion value corresponding to a depth field of an activation value will be referred to as a "second conversion value". The second depth field detector 509 may transmit the second conversion value to the adder 513.

The adder 513 may sum the first conversion value received from the first depth field detector 503 and the second conversion value received from the second depth field detector 509. The adder 513 may transmit a summation result to the encoder 519. For example, the adder 513 may receive the first conversion value (e.g., "2") from the first depth field detector 503 and receive the second conversion value (e.g., "1") from the second depth field detector 509. In this case, the adder 513 may transmit a summation result (e.g., "3") to the encoder 519.

The multiplication circuit 515 may perform a binary multiplication operation based on the first operand and the second operand.

When the multiplication circuit 515 is, for example, a 6-bit*6-bit binary multiplication circuit, the bitwidth (or size) of an operation result of the multiplication circuit 515 may be 12 bits.

The shift circuit 517 may receive the operation result of the multiplication circuit 515 from the multiplication circuit 515. The shift circuit 517 may shift the operation result of the multiplication circuit 515 based on the check result (e.g., "0" or "1") of the first bit check circuit 505 and the check result (e.g., "0" or "1") of the second bit check circuit 511. For example, the shift circuit 517 may receive "0" from the first bit check circuit 505 and receive "0" from the second bit check circuit 511. In one example, the shift circuit 517 may shift the operation result of the multiplication circuit 515 to the right by 2 bits. The shift circuit 517 may receive "0" from one of the first bit check circuit 505 and the second bit check circuit 511 and receive "1" from the other one. In one example, the shift circuit 517 may shift the operation result of the multiplication circuit 515 to the right by 1 bit. The shift circuit 517 may receive "1" from the first bit check circuit 505 and receive "1" from the second bit check circuit 511. In one example, the shift circuit 517 may not shift the operation result of the multiplication circuit 515.

When the shift circuit 517 shifts the operation result of the multiplication circuit 515, the shift circuit 517 may transmit a shift result to the encoder 519. When the shift circuit 517 does not shift the operation result of the multiplication circuit 515, the shift circuit 517 may transmit the operation result of the multiplication circuit 515 to the encoder 519.

The encoder 519 may determine output data based on the data received from the shift circuit 517 (e.g., the shift result or the operation result of the multiplication circuit 515) and the summation result received from the adder 513. The output data may have the first number format 200. The bitwidth of the output data may be the same as the bitwidth of the weight value and the bitwidth of the activation value. When the bitwidth of the weight value and the bitwidth of the activation value are 8 bits, the bitwidth of the output data may be 8 bits.

The encoder 519 may determine a sign bit of the output data using a sign bit of the weight value and a sign bit of the activation value. When the sign bit of the weight value and the sign bit of the activation value are the same, the encoder 519 may determine the sign bit of the output data to be "0". When the sign bit of the weight value and the sign bit of the activation value are different from each other, the encoder 519 may determine the sign bit of the output data to be "1".

The encoder 519 may determine a depth field of the output data using the summation result received from the adder 513. The encoder 519 may find a depth field mapped to the summation result by referring to Table 3 above, and determine the found depth field to be the depth field of the output data. For example, when receiving a summation result of "3" from the adder 513, the encoder 519 may determine "0001" mapped to "3" to be the depth field of the output data by referring to Table 3 above as a non-limiting example.

The encoder 519 may extract upper bits of the data received from the shift circuit 517 (e.g., the shift result or the operation result of the multiplication circuit 515), and determine the extracted upper bits to be a mantissa field of the output data. For example, the bitwidth of the output data may be 8 bits. The number of sign bits of the output data may be "1". When the depth field of the output data is "0001", the number of bits of the depth field may be "4". The encoder 519 may determine or recognize that 3 bits of 8 bits of the output data are the size of the mantissa field. The encoder 519 may extract more significant 3 bits of the data received from the shift circuit 517, and determine the extracted bits to be the mantissa field of the output data. When the extracted bits are, for example, "abc", the encoder 519 may determine "00001abc" to be the output data.

The encoder 519 may store the output data in a memory (e.g., an output buffer).

Table 4 below shows examples of accuracies and consistencies when the computing apparatus 100 uses several number formats.

**Table 4**

| | Floating-point | | Floating-point | | Fixed-point | | First number format | |
|---|---|---|---|---|---|---|---|---|
| Bitwidth | 32 (baseline ) | 16 (half) | 10 | 11 | 8 | 11 | 8 | 9 |
| Mantissa | 23 | 10 | 4 | 5 | 7 | 10 | 5 | 6 |
| Hidden bit | 1 | 1 | 1 | 1 | 0 | 0 | 1 | 1 |
| Accuracy(%) | 79.814 | 79.8 | 79.69 | 79.71 8 | 79.18 8 | 79.8 | 79.74 8 | 79.81 2 |
| Accuracy difference(%) | - | 0.014 | 0.124 | 0.096 | 0.626 | 0.014 | 0.066 | 0.002 |
| Consistency(%) | - | 99.92 2 | 96.64 6 | 98.37 6 | 94.09 6 | 99.28 2 | 97.82 6 | 99.01 2 |
| 1-consistency(% ) | - | 0.078 | 3.354 | 1.624 | 5.904 | 0.718 | 2.174 | 0.988 |

In Table 4 above as a non-limiting example, "Accuracy" denotes the degree of the accuracy of image classification, and "Consistency" denotes the degree of being consistent with an image classification result when floating-point 32 (baseline) is used. When using the first number format, the computing apparatus 100 may exhibit a relatively high accuracy even for a relatively small bitwidth. Since the first number format has a smaller bitwidth than other number formats, the amount of data received by the computing apparatus 100 from external memory and the communication traffic therefor may be reduced. As a result, the energy efficiency of the computing apparatus 100 may be improved.

FIG. 6 illustrates an example operator in a computing apparatus according to one or more embodiments.

Referring to FIG. 6, an example operator (or an example processing circuitry) 600 may include a masking circuit 601, a depth field detector 603, a bit check circuit 605, a multiplication circuit 607, a shift value detector 609, a shift circuit 611, an adder 613, and a combination circuit 615.

The operator 600 may be a non-limiting example of the operator 130 in FIG. 1.

The depth field detector 603 may be configured to detect a depth field of a weight value having the first number format 200.

The operator 600 may determine output data (e.g., output feature values) by performing an operation based on a weight value of the first number format 200 and an activation value of a second number format (e.g., a floating-point format). In other words, when the weight value and the activation value have different number formats, the operator 600 may determine the output data based on the weight value and the activation value. The description to be provided below with reference to FIG. 6 may also apply when the weight value has the second number format and the activation value has the first number format 200.

The operator 600 may receive the weight value of the first number format 200 from a memory (e.g., the first buffer 110 in FIG. 1). The operator 600 may transmit the weight value to the masking circuit 601 and the depth field detector 603.

The masking circuit 601 may determine a first operand of the multiplication circuit 607 by processing the weight value. The description of the first masking circuit 501 of FIG. 5A may apply to the masking circuit 601.

The operator 600 may receive the activation value of the second number format from a memory (e.g., the second buffer 120 in FIG. 1). The operator 600 may transmit an exponent of the activation value to the adder 613 and transmit a mantissa of the activation value "1" to the multiplication circuit 607. In one example, "1" may be a bit added to the front end of the mantissa of the activation value. Accordingly, the mantissa to which "1" is added may be a second operand of the multiplication circuit 607. Thus, when the mantissa of the activation value is "0100110101" which is 10 bits long, "10100110101" obtained by adding "1" to the front end of "0100110101" may be the second operand of the multiplication circuit 607.

In one example, the weight value may be 8 bits long, and the activation value may be 16 bits long. The mantissa of the activation value may be 10 bits long. The multiplication circuit 607 may be, for example, a 6-bit*11-bit binary multiplication circuit. The size of the weight value, the size of the activation value, and the size of the multiplication circuit 607 are non-limiting examples described herein.

The depth field detector 603 may detect a depth field related to a range of the weight value from the weight value. For example, the depth field detector 603 may detect a bit (hereinafter, referred to as a "target bit") that first is "1" in remaining bits, excluding an MSB from bits of the weight value. The depth field detector 603 may detect (or determine) bits from a second MSB of the weight value to the target bit as a depth field of the weight value. The depth field detection operation of the first depth field detector 503 of FIG. 5A may apply to the depth field detection operation of the depth field detector 603.

The depth field detector 603 may determine a conversion value corresponding to the detected depth field of the weight value. The depth field detector 603 may determine a conversion value corresponding to the detected depth field of the weight value through a predetermined mapping relationship between depth fields and conversion values (e.g., Table 3 above). For example, when a depth field "001" is detected, the depth field detector 603 may determine a conversion value corresponding to "001" to be "2" through Table 3 above.

The depth field detector 603 may check whether the sign of the exponent of the activation value is plus or minus.

The depth field detector 603 may check a base value of the weight value.

The depth field detector 603 may apply the sign of the exponent of the activation value to a result of multiplying the determined conversion value by *k* which is an exponent when the base value of the weight value is expressed as a power of 2, and transmit a result of the applying to the adder 613. For example, when the base value of the weight value is "4", the base value may be expressed as 2². When the determined conversion value is "2", the depth field detector 603 may calculate "4" by multiplying the exponent *k* "2" of the base value by the determined conversion value "2". When the exponent of the activation value is negative, the depth field detector 603 may apply a minus to the multiplication result "4" and transmit "-4" to the adder 613.

The bit check circuit 605 may check the value of a bit next to the target bit of the weight value, and transmit a value according to a check result (e.g., "0" or "1") to the adder 613. For example, the bit check circuit 605 may transmit "-1" to the adder 613 when the bit next to the target bit of the weight value is "0", and transmit "0" to the adder 613 when the bit next to the target bit of the weight value is "1".

FIG. 6 illustrates that the depth field detector 603 and the bit check circuit 605 are separated, but this is merely an example, and the depth field detector 603 and the bit check circuit 605 may be implemented as one circuit.

The multiplication circuit 607 may be configured to perform an operation (e.g., a binary multiplication operation) based on the first operand and the second operand received from the masking circuit 601. The multiplication circuit 607 may be a 6-bit*11-bit binary multiplication circuit as in the above non-limiting example, and the multiplication circuit 607 may receive a 6-bit first operand and an 11-bit second operand. An operation result of the multiplication circuit 607 may be 17 bits long.

The multiplication circuit 607 may transmit the operation result to the shift value detector 609.

The shift value detector 609 may determine a shift value for normalizing the operation result of the multiplication circuit 607. For example, the operation result of the multiplication circuit 607 may be "01xxxxxxxxxxxxxxx" which is 17 bits long. "01xxxxxxxxxxxxxxx" may correspond to "0.01xxxxxxxxxxxxxxx". The shift value detector 609 may determine a shift value for normalizing "0.01xxxxxxxxxxxxxxx" to "1.xxxxxxxxxxxxxxx*2⁻²" to be "-2".

The shift value detector 609 may transmit the determined shift value to the adder 613 and the shift circuit 611.

The adder 613 may determine an exponent of the output data using the value received from the depth field detector 603, the exponent of the activation value, the value received from the bit check circuit 605, and the shift value received from the shift value detector 609. For example, the exponent of the activation value may be "-1". When the adder 613 receives "-4" from the depth field detector 603, "-1" from the bit check circuit 605, and "-2" from the shift value detector 609, the adder 613 may determine the exponent of the output data to be "-8" by summing "-4", "-1", "-1", and "-2".

The shift circuit 611 may shift the operation result of the multiplication circuit 607 based on the shift value, and extract a portion of bits of the mantissa from the shifted operation result. For example, when the shift value is "-2" and the operation result of the multiplication circuit 607 is "01xxxxxxxxxxxxxxx", the shift circuit 611 may shift (or normalize) "0.01xxxxxxxxxxxxxxx" to "1.xxxxxxxxxxxxxxx*2⁻²". When the output data is of a 16-bit floating-point format, 10 bits of 16 bits may correspond to mantissa bits of the floating-point format. The shift circuit 611 may extract more significant 10 bits from the mantissa bits "xxxxxxxxxxxxxxx" of "1.xxxxxxxxxxxxxxx*2⁻²".

The shift circuit 611 may transmit the extracted bits to the combination circuit 615.

The combination circuit 615 may be configured to determine the output data based on the bits received from the shift circuit 611, the exponent received from the adder 613, the sign bit of the weight value, and the sign bit of the activation value. For example, when the sign bit of the weight value and the sign bit of the activation value are the same, the combination circuit 615 may determine a sign bit of the output data to be "0". When receiving the exponent from the adder 613 and receiving "xxxxxxxxxx", which is 10 bits long, from the shift circuit 611, the combination circuit 615 may determine the output data "0eeeeexxxxxxxxxx" of the 16-bit floating-point format. Here, "eeeee" may correspond to a binary code of the exponent.

In an example, the combination circuit 615 may include a first register for storing the sign bit of the output data, a second register for storing the exponent received from the adder 613, and a third register for storing the bits received from the shift circuit 611. The combination circuit 615 may write "0" to the first register when the sign bit of the weight value and the sign bit of the activation value are the same.

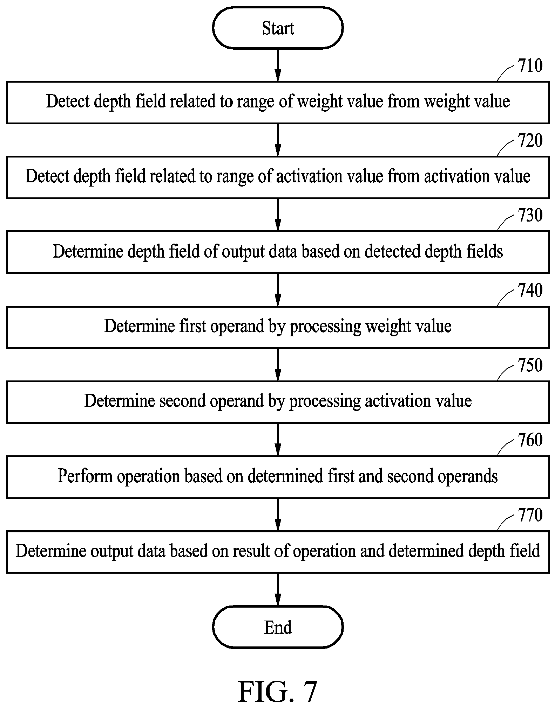

FIG. 7 illustrates an example method of performing an operation based on a weight value of a first number format and an activation value of the first number format by a computing apparatus according to one or more embodiments.

Referring to FIG. 7, in operation 710, a computing apparatus (e.g., the computing apparatus 100 in FIG. 1) may detect a depth field related to a range of a weight value from the weight value. For example, an operator (e.g., the operator 130 in FIG. 1 or the operator 500 in FIG. 5) may detect a first target bit that first has a first value (e.g., "1") in remaining bits, excluding an MSB from bits of the weight value. The operator 130 may detect bits from a second MSB of the weight value to the first target bit as a depth field of the weight value. When the second MSB of the weight value first has the first value, the operator 130 may detect the second MSB of the weight value as the depth field of the weight value.

In operation 720, the computing apparatus 100 may detect a depth field related to a range of an activation value from the activation value. For example, the operator 130 may detect a second target bit that first has the first value in remaining bits, excluding an MSB from bits of the activation value. The operator 130 may detect bits from a second MSB of the activation value to the second target bit as a depth field of the activation value. When the second MSB of the activation value first has the first value, the operator 130 may detect the second MSB of the activation value as the depth field of the activation value.

In operation 730, the computing apparatus 100 may determine a depth field of output data based on the detected depth fields. For example, the computing apparatus 100 may determine conversion values corresponding to the determined respective depth fields, sum the determined conversion values, and determine the depth field of the output data using a result of the summing.

In operation 740, the computing apparatus 100 may determine a first operand by processing the weight value. For example, the operator 130 may determine whether a bit next to the first target bit has the first value. When the bit next to the first target bit has the first value, the operator 130 may change a value of the first target bit from the first value to a second value (e.g., "0"). The operator 130 may determine the first operand including the first target bit having the second value, the bit next to the first target bit, and a bit following the bit next to the first target bit. When the bit next to the first target bit has the second value, the operator 130 may change a value of the bit next to the first target bit from the second value to the first value. The operator 130 may change the value of the first target bit from the first value to the second value. The operator 130 may determine the first operand including the first target bit having the second value, the next bit having the first value, and the bit following the next bit.

In operation 750, the computing apparatus 100 may determine a second operand by processing the activation value. For example, the operator 130 may determine whether a bit right next to the second target bit has the first value. When the bit right next to the second target bit has the first value, the operator 130 may change a value of the second target bit from the first value to the second value. The operator 130 may determine the second operand including the second target bit having the second value, the bit right next to the second target bit, and a bit immediately following the next bit. When the bit right next to the second target bit has the second value, the operator 130 may change a value of the bit right next to the second target bit from the second value to the first value. The operator 130 may change the value of the second target bit from the first value to the second value. The operator 130 may determine the second operand including the second target bit having the second value, the next bit having the first value, and the bit immediately following the next bit.

In operation 760, the computing apparatus 100 may perform an operation based on the determined first and second operands. For example, the operator 130 may perform a binary multiplication operation based on the determined first and second operands.

In operation 770, the computing apparatus 100 may determine the output data based on a result of the operation and the determined depth field. The operator 130 may extract a portion of bits from the result of the operation. The extracted portion of bits may correspond to a mantissa field of the output data. The operator 130 may determine the output data using the extracted portion of bits, the determined depth field, a sign bit of the weight value, and a sign bit of the activation value.

In an example, when each of a leading bits of a mantissa field of the weight value and a leading bit of a mantissa field of the activation value has the second value (e.g., "0"), the operator 130 may perform a 2-bit shift (e.g., a right 2-bit shift) on the result of the operation. The operator 130 may extract a portion of bits from the 2-bit shifted operation result. The extracted portion of bits may correspond to a mantissa field of the output data. When one of the leading bits of the mantissa field of the weight value and the leading bit of the mantissa field of the activation value has the second value and the other one has the first value, the operator 130 may perform a 1-bit shift (e.g., a right 1-bit shift) on the result of the operation. The operator 130 may extract a portion of bits from the 1-bit shifted operation result. The extracted portion of bits may correspond to a mantissa field of the output data. The operator 130 may not perform a shift on the result of the operation when each of the leading bits of the mantissa field of the weight value and the leading bit of the mantissa field of the activation value has the first value.

In an example, the computing apparatus 100 may convert a raw weight value of a number format (e.g., a second number format, a third number format, etc.) other than the first number format 200 and a raw activation value of a number format (e.g., the second number format, the third number format, etc.) other than the first number format 200 to a weight value of the first number format 200 and an activation value of the first number format 200, respectively. As will be described with reference to FIG. 9, the computing apparatus 100 may determine the depth field of the weight value based on an exponent value of the raw weight value and a preset factor (e.g., *k* described above (or a base value)). The computing apparatus 100 may determine a bit corresponding to a first remainder derived through a division operation between the exponent value of the raw weight value and the preset factor. The computing apparatus 100 may determine a mantissa field of the weight value through the bit corresponding to the first remainder and a portion of bits of mantissa bits of the raw weight value. The computing apparatus 100 may determine the depth field of the activation value based on an exponent value of the raw activation value and the preset factor. The computing apparatus 100 may determine a bit corresponding to a second remainder derived through a division operation between the exponent value of the raw activation value and the preset factor. The computing apparatus 100 may determine a mantissa field of the activation value through the bit corresponding to the second remainder and a portion of bits of mantissa bits of the raw activation value.

The description provided with reference to FIGS. 1 through 6 may apply to the operation of the computing apparatus of FIG. 7.

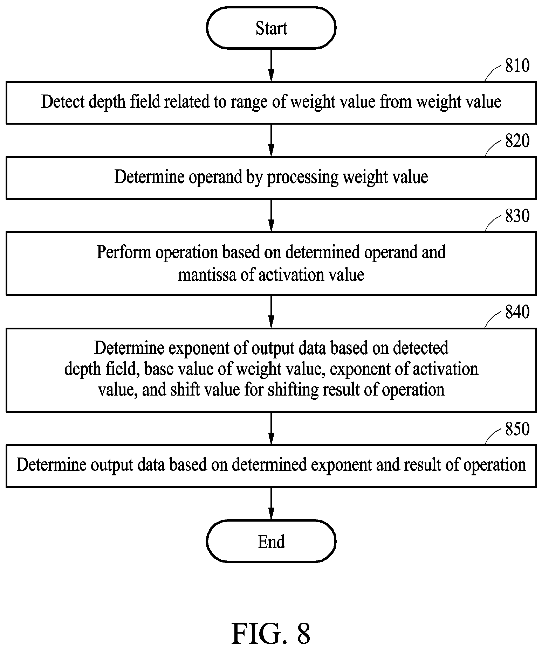

FIG. 8 illustrates an example of performing an operation based on a weight value of a first number format and an activation value of a second number format by a computing apparatus.

Referring to FIG. 8, in operation 810, a computing apparatus (e.g., the computing apparatus 100 in FIG. 1) may detect a depth field related to a range of a weight value from the weight value. For example, an operator (e.g., the operator 130 in FIG. 1 or the operator 600 in FIG. 6) of the computing apparatus 100 may detect a target bit that first has a first value in remaining bits, excluding an MSB from bits of the weight value. The operator 130 may detect bits from a second MSB of the weight value to the target bit as a depth field of the weight value.

In operation 820, the computing apparatus 100 may determine an operand by processing the weight value. The description of operation 740 may apply to operation 820.

In operation 830, the computing apparatus 100 may perform an operation based on the determined operand and a mantissa of the activation value. For example, the operator 130 may perform a binary multiplication operation based on the determined operand and the mantissa of the activation value.

In an example, the operator 130 may add "1" to the front end of the mantissa of the activation value, and perform a binary multiplication operation based on the determined operand and the mantissa to which "1" is added.

In operation 840, the computing apparatus 100 may determine an exponent of the output data based on the detected depth field, a base value of the weight value, an exponent of the activation value, and a shift value for shifting the result of the operation. In an example, the operator 130 may determine a conversion value corresponding to the detected depth field. The operator 130 may determine the exponent of the output data using the determined conversion value, *k* which is an exponent when the base value of the weight value is expressed as a power of 2, the value (e.g., "-1" or "0") determined according to the leading bits of the mantissa field of the weight value, the shift value for shifting the result of the operation, and the exponent of the activation value. For example, the operator 130 may apply a sign (e.g., a plus or a minus) of the exponent of the activation value to a result of multiplication between the determined conversion value and *k*, and determine the exponent of the output data by summing the sign-applied multiplication result, the exponent of the activation value, the value determined according to the leading bit of the mantissa field of the weight value, and the shift value. In this case, the value determined according to the leading bit may correspond to "-1" when the leading bit of the mantissa field of the weight value has the second value, and the value determined according to the leading bit may correspond to "0" when the leading bit has the first value.

In operation 850, the computing apparatus 100 may determine the output data based on the determined exponent and the result of the operation. The operator 130 may extract a portion of bits from the result of the operation. The extracted portion of bits may correspond to mantissa bits of the output data of the floating-point format. The operator 130 may determine the output data using the extracted portion of bits and the determined exponent.

In an example, the computing apparatus 100 may convert a raw weight value of a number format other than the first number format 200 to the weight value of the first number format 200. As will described with reference to FIG. 9, the computing apparatus 100 may determine the depth field of the weight value based on an exponent value of the raw weight value and a preset factor, and determine a mantissa field of the weight value through a bit corresponding to a remainder derived through a division operation between the exponent value of the raw weight value and the preset factor and a portion of bits of mantissa bits of the raw weight value.

The description provided with reference to FIGS. 1 through 6 may apply to the operation of the computing apparatus of FIG. 8.

FIG. 9 illustrates an example computing apparatus configured to perform a number format conversion according to one or more embodiments.

Referring to FIG. 9, a computing apparatus 900 may include the first buffer 110, the second buffer 120, the operator 130, and a converter 910. The description of the computing apparatus 100 may apply to the computing apparatus 900 as a non-limiting example.

The converter 910 may be configured to convert a raw weight value of a number format (e.g., a second number format, a third number format, etc.) other than the first number format 200 to a weight value of the first number format 200. The converter 910 may store the weight value of the first number format 200 in the first buffer 110.

The converter 910 may be configured to convert a raw activation value of a number format (e.g., the second number format, the third number format, etc.) other than the first number format 200 to an activation value of the first number format 200. The converter 910 may store the activation value of the first number format 200 in the second buffer 120.

The converter 910 may be configured to determine a depth field of the weight value of the first number format 200 based on an exponent value of the raw weight value of the second number format and a preset factor (e.g., *k* described above (or a base value)). The converter 910 may be configured to determine a bit corresponding to a remainder derived through a division operation between the exponent value of the raw weight value and the preset factor (or a result of a modulo operation between the exponent value of the raw weight value and the preset factor) (e.g., the first remainder described above). The converter 910 may be configured to determine a mantissa field of the weight value of the first number format 200 through the bit corresponding to the remainder and a portion of bits of mantissa bits of the raw weight value. Examples of the bit corresponding to the remainder derived through the division operation between the exponent value of the raw weight value and the preset factor are shown in Table 5 below as non-limiting examples.

**Table 5**

| | Remainder derived through division operation between exponent value of raw weight value and preset factor | Bit(s) corresponding to remainder |
|---|---|---|
| *k*=*2* | 1 | 1 |
| | 0 | 0 |
| *k=3* | 2 | 01 |
| | 1 | 1 |
| | 0 | 00 |
| ... | ... | ... |

In Table 5 above, when *k*=2, the converter 910 may determine the bit corresponding to the remainder as "1" when the remainder is calculated as "1", and determine the bit corresponding to the remainder as "0" when the remainder is calculated as "0". As will be described later, the determined bit may correspond to a first bit of the mantissa field. When k=3, the converter 910 may determine bits corresponding to the remainder as "01" when the remainder is calculated as "2", and determine the bits corresponding to the remainder as "00" when the remainder is calculated as "0". The determined bits may correspond to the first and second bits of the mantissa field. When the remainder is calculated as "1", the converter 910 may determine the bit corresponding to the remainder as "1". The determined bit may correspond to the first bit of the mantissa field.

As an example, the weight value except for the sign bit may be 7 bits long, and *k*=2 (or base=4).

In one example, the raw weight value of the second number format may correspond to 1.xxxx...*2⁻³ in Table 1 above. In 1.xxxx...*2⁻³, the exponent value may be "-3". The converter 910 may determine a rounded value "2" of a result "1.5" of dividing the absolute value "3" of the exponent value by *k* to be a depth value, and determine "01" to be the depth field of the weight value according to the depth value "2". Thus, the depth field of the weight value may be 2 bits long. Since the remainder is "1" when the absolute value "3" of the exponent value is divided by *k,* the converter 910 may determine a bit "1" corresponding to the remainder "1" by referring to Table 5 above. The converter 910 may determine the first bit of the mantissa field of the weight value to be "1" according to the determined bit "1". Since the weight value except for the sign bit is 7 bits long and the depth field is 2 bits long, the mantissa field may be 5 bits long. Since the first bit of the mantissa field is "1", the converter 910 may extract more significant 4 bits (e.g., xxxx) from the mantissa bits "xxxx..." of 1.xxxx...*2⁻³ to fill the remaining 4 bits of the mantissa field. The converter 910 may convert the raw weight value 1.xxxx...*2⁻³ of the second number format to a weight value s011xxxx of the first number format 200. Here, s denotes a sign bit.

In one example, the raw weight value of the second number format may correspond to 1.xxxx...*2⁻⁴ in Table 1 above. In 1.xxxx...*2⁻⁴, the exponent value may be "-4". The converter 910 may determine a rounded value "2" of a result "2" of dividing the absolute value "4" of the exponent value by *k* to be a depth value, and determine "01" to be the depth field of the weight value according to the depth value "2". Since the remainder is "0" when the absolute value "4" of the exponent value is divided by *k,* the converter 910 may determine a bit "0" corresponding to the remainder "0" by referring to Table 5 above. The converter 910 may determine the first bit of the mantissa field of the weight value to be "0" according to the determined bit "0". The converter 910 may extract more significant 4 bits (e.g., xxxx) from the mantissa bits "xxxx..." of 1.xxxx...*2⁻⁴ to fill the remaining bits of the mantissa field. The converter 910 may convert the raw weight value 1.xxxx...*2⁻⁴ of the second number format to a weight value s010xxxx of the first number format 200. Here, s denotes a sign bit.

As another example, the weight value except for the sign bit may be 7 bits long, and *k*=3 (or base=8).

In one example, the raw weight value of the second number format may correspond to 1.xxxxx...*2⁻¹ in Table 2 above. In 1.xxxxx...*2⁻¹, the exponent value may be "-1". The converter 910 may determine a rounded value "1" of a result "1/3" of dividing the absolute value "1" of the exponent value by *k* to be a depth value, and determine "1" to be the depth field according to the depth value "1". Since the remainder is "1" when the absolute value "1" of the exponent value is divided by *k,* the converter 910 may determine a bit "1" corresponding to the remainder "1" by referring to Table 5 above. The converter 910 may determine the first bit of the mantissa field to be "1" according to the determined bit "1". Since the weight value except for the sign bit is 7 bits long and the depth field is 1 bit long, the mantissa field may be 6 bits long. Since the first bit of the mantissa field may be "1", the converter 910 may extract more significant 5 bits (e.g., xxxxx) from the mantissa bits "xxxxx..." of 1.xxxxx...*2⁻¹ to fill the remaining 5 bits of the mantissa field. The converter 910 may convert the raw weight value 1.xxxxx... *2⁻¹ of the second number format to a weight value s11xxxxx of the first number format 200. Here, s denotes a sign bit.

In one example, the raw weight value of the second number format may correspond to 1.xxxxx...*2⁻² in Table 2 above. In 1.xxxxx...*2⁻², the exponent value may be "-2". The converter 910 may determine a rounded value "1" of a result "2/3" of dividing the absolute value "2" of the exponent value by *k* to be a depth value, and determine "1" to be the depth field according to the depth value "1". Since the remainder is "2" when the absolute value "2" of the exponent value is divided by *k,* the converter 910 may determine bits "01" corresponding to the remainder "2" by referring to Table 5 above. The converter 910 may determine the first and second bits of the mantissa field to be "01" according to the determined bits "01". Since the weight value except for the sign bit is 7 bits long and the depth field is 1 bit long, the mantissa field may be 6 bits long. Since the first and second bits of the mantissa field may be "01", the converter 910 may extract more significant 4 bits (e.g., xxxx) from the mantissa bits "xxxxx..." of 1.xxxxx...*2⁻² to fill the remaining 4 bits of the mantissa field. The converter 910 may convert the raw weight value 1.xxxxx...*2⁻² of the second number format to a weight value s101xxxx of the first number format 200. Here, s denotes a sign bit.

In one example, the raw weight value of the second number format may correspond to 1.xxxx...*2⁻³ in Table 2 above. In 1.xxxx...*2⁻³, the exponent value may be "-3". The converter 910 may determine a rounded value "1" of a result "1" of dividing the absolute value "3" of the exponent value by *k* to be a depth value, and determine "1" to be the depth field according to the depth value "1". Since the remainder is "0" when the absolute value "3" of the exponent value is divided by *k,* the converter 910 may determine bits "00" corresponding to the remainder "0" by referring to Table 5 above. The converter 910 may determine the first and second bits of the mantissa field to be "00" according to the determined bits "00". The converter 910 may extract more significant 4 bits (e.g., xxxx) from the mantissa bits "xxxx..." of 1.xxxx...*2⁻³ to fill the remaining bits of the mantissa field. The converter 910 may convert the raw weight value 1.xxxx...*2⁻³ of the second number format to a weight value s100xxxx of the first number format 200. Here, s denotes a sign bit.

In the same manner as the method of converting the raw weight value to the weight value of the first number format 200 described above, the converter 910 may be configured to convert a raw activation value to an activation value of the first number format 200.

When a raw weight value and/or a raw activation value is of a third number format (e.g., a fixed-point), the converter 910 may be configured to convert the raw weight value and/or the raw activation value into a second number format (e.g., a floating-point). The converter 910 may be configured to convert the raw weight value and/or raw activation value converted into the second number format into the weight value and/or activation value of the first number format 200.

FIG. 10 illustrates an example processing system according to one or more embodiments.

Referring to FIG. 10, a processing system 1000 may include a processor 1010, a host 1020, and a memory 1030.

The processing system 1000 may also be referred to as an electronic device. As an example, the processing system 1000 may be applied to a data center and a server. Examples are not limited thereto, and the processing system 1000 may be applied to a user terminal (e.g., a personal computer (PC), a smartphone, a laptop computer, a tablet PC, etc.).

The processor 1010 may correspond to the computing apparatus 100 in FIG. 1 or 900 in FIG. 9 described above.

The processor 1010 may also be referred to as a neural processing unit (NPU) or a deep learning accelerator.

Although a single processor 1010 is shown in FIG. 10, examples are not limited thereto, and the processing system 1000 may include one or more processors.

The processor 1010, the host 1020, and the memory 1030 may communicate with each other. For example, the processor 1010, the host 1020, and the memory 1030 may communicate with each other through a bus, a network on a chip (NoC), or a peripheral component interconnect express (PCIe).

The host 1020 may be an electronic device that controls the operations of the components included in the processing system 1000. The host 1020 may include, for example, a central processing unit (CPU). The host 1020 may include a compiler, and the compiler may convert an application (or a program, source code) into a format processable by the processor 1010 or an executable file that is executable by the processor 1010 by compiling the application.

The memory 1030 may be located outside of the processor 1010, and may also be referred to as off-chip memory. The memory 1030 may include a dynamic random-access memory (DRAM). However, examples are not limited thereto.

The memory 1030 may store instructions to be executed by the processor 1010, and store data (e.g., a weight value and/or an activation value). The weight value and/or activation value may have a first number format 200. The instructions and data stored in the memory 1030 may be transmitted to the processor 1010. The processor 1010 may perform an operation on the data according to an instruction.

The processors, memories, electronic devices, apparatuses, processing system 1000, computing apparatus 100 and 900, buffers 110, 120, operators 130, 500 and 600, masking circuits 501, 507 and 601, depth field detectors 503, 509 and 603, bit check circuits 505, 511 and 605, adders 513 and 613, multiplication circuits 515 and 607, shift value detector 609, shift circuits 517 and 611, combination circuit 615, encoder 519, converter 910, memory 1030, host 1020, processor 1010, and other apparatuses, devices, units, modules, and components described herein with respect to FIGS. 1-10 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-10 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the invention is defined by the enclosed claims.

## Claims

1. A computing apparatus, comprising:
a processing circuitry configured to:
detect a weight depth field, related to a range of a weight value of a plurality of weight values, within the weight value, and detect an activation depth field, related to a range of an activation value of a plurality of activation values, within the activation value;
identify a first operand in the weight value, and identify a second operand in the activation value; and
generate an output value having a resultant depth field determined based on the weight depth field and the activation depth field, by performing an operation based on the identified first and second operands.

2. The computing apparatus of claim 1, further comprising:
a first buffer configured to store the weight value; and
a second buffer configured to store the activation value;
wherein the processing circuitry comprises:
a first depth field detector configured to: detect, in a direction toward a least significant bit, LSB, of the weight value, a first target bit, among bits of the weight value after a most significant bit, MSB, of the weight value, that is first to have a first value; and
determine bits from a second MSB of the weight value through the first target bit to be the weight depth field; and
a second depth field detector configured to: detect, in a direction toward a least significant bit, LSB, of the activation value, a second target bit, among bits of the activation value after a most significant bit, MSB, of the activation value, that is first to have the first value, and
determine bits from a second MSB of the activation value through the second target bit to be the activation depth field.

3. The computing apparatus of claim 1 or 2, wherein
the processing circuitry comprises:
a first depth field detector configured to: detect, in a direction toward a least significant bit, LSB, of the weight value, a first target bit, among bits of the weight value after a most significant bit, MSB, and a second MSB of the weight value, that is first to have a first value, and
determine bits from the second MSB of the weight value through the first target bit to be the weight depth field; and
a second depth field detector configured to detect, in a direction toward a least significant bit, LSB, of the activation value, a second target bit, among bits of the activation value after a most significant bit, MSB, and a second MSB of the activation value, that is first to have the first value; and
determine bits from the second MSB of the activation value through the second target bit to be the activation depth field.

4. The computing apparatus of claim 3, wherein the processing circuitry comprises a first bit check circuit configured to determine whether a bit next, in the direction toward the LSB of the weight value, to the first target bit of the weight value has the first value; and a first masking circuit configured to: when the next bit has the first value, change a value of the first target bit from the first value to a second value and identify the first operand as comprising the first target bit having the second value, the next bit, and a bit following the next bit; and when the next bit has the second value, change a value of the next bit from the second value to the first value, change the value of the first target bit from the first value to the second value, and identify the first operand as comprising the first target bit having the second value, the next bit having the first value, and a bit following the next bit, or
wherein the processing circuitry comprises a second bit check circuit configured to determine whether a bit next, in the direction toward the LSB of the activation value, to the second target bit of the activation value has the first value; and a second masking circuit configured to: when the next bit has the first value, change a value of the second target bit from the first value to a second value and identify the second operand comprising the second target bit having the second value, the next bit, and a bit following the next bit; and when the next bit has the second value, change a value of the next bit from the second value to the first value, change the value of the second target bit from the first value to the second value, and identify the second operand comprising the second target bit having the second value, the next bit having the first value, and a bit following the next bit.

5. The computing apparatus of one of claims 1 to 4, wherein the processing circuitry is further configured to generate respective conversion values corresponding to the detected weight and activation depth fields, sum the generated respective conversion values, and determine the resultant depth field of the output data using a result of the summing.

6. The computing apparatus of one of claims 1 to 5, wherein the processing circuitry comprises:
a shift circuit configured to perform a 2-bit shift on the result of the operation when each of a leading bit in a mantissa field of the weight value and a leading bit in a mantissa field of the activation value has a second value, perform a 1-bit shift on the result of the operation when one of the leading bit in the mantissa field of the weight value and the leading bit in the mantissa field of the activation value has the second value and the other one has the first value, and skip a shift on the result of the operation when each of the leading bit in the mantissa field of the weight value and the leading bit in the mantissa field of the activation value has the first value, or
wherein the processing circuitry comprises an encoder configured to extract a portion of bits from the result of the operation, and generate the output data using the extracted portion of bits, the resultant depth field, a sign bit of the weight value, and a sign bit of the activation value.

7. The computing apparatus of one of claims 1 to 6, wherein the weight value and the activation value each have a first number format,
wherein the computing apparatus further comprises a number format converter configured to convert a raw weight value of a number format other than the first number format and a raw activation value of the number format other than the first number format, or of another number format, to the weight value of the first number format and the activation value of the first number format, respectively, and
wherein the number format converter is further configured to:
detect the weight depth field of the weight value based on an exponent value of the raw weight value and a preset factor, determine a bit corresponding to a first remainder derived through a division operation between the exponent value of the raw weight value and the preset factor, and determine a mantissa field of the weight value through the bit corresponding to the first remainder and a portion of bits of mantissa bits of the raw weight value; and
detect the activation depth field of the activation value based on an exponent value of the raw activation value and a preset factor, determine a bit corresponding to a second remainder derived through a division operation between the exponent value of the raw activation value and the preset factor, and determine a mantissa field of the activation value through the bit corresponding to the second remainder and a portion of bits of mantissa bits of the raw activation value.

8. A computer-readable storage medium having instruction that, when executed by a processing circuitry of a computing apparatus, cause the processing circuitry to:
detect a weight depth field, related to a range of a weight value of a plurality of weight values, within the weight value;
identify an operand in the weight value;
perform an operation based on the identified operand and a mantissa of an activation value of a plurality of activation values,
generate an exponent of output data based on the detected weight depth field, a base value of the weight value, an exponent of the activation value, and a shift value for shifting a result of the operation; and
generate the output data based on the generated exponent and the result of the operation.

9. The computer-readable storage medium of claim 8, wherein
the processing circuitry comprises a depth field detector configured to detect, in a direction toward a least significant bit, LSB, of the weight value, a target bit, among bits of the weight value after a most significant bit, MSB, and a second MSB of the weight value, that is first to have a first value, and determine bits from the second MSB through the target bit to be the weight depth field.

10. The computer-readable storage medium of claim 9, wherein the depth field detector is further configured to determine the second MSB as the weight depth field when the second MSB first has the first value.

11. The computer-readable storage medium of claim 9, wherein the processing circuitry comprises:
a bit check circuit configured to determine whether a bit next, in the direction toward LSB of the weight value, to the target bit of the weight value has the first value; and
a masking circuit configured to:
when the next bit has the first value, change a value of the target bit from the first value to a second value and identify the operand as comprising the target bit having the second value, the next bit, and a bit following the next bit; and
when the next bit has the second value, change a value of the next bit from the second value to the first value, change the value of the target bit from the first value to the second value, and identify the operand as comprising the target bit having the second value, the next bit having the first value, and a bit following the next bit.

12. The computer-readable storage medium of one of claims 8 to 11, wherein the processing circuity is further instructed to:
generate a conversion value corresponding to the detected weight depth field;
generate the exponent of the output data using the generated conversion value, k which is an exponent when the base value is expressed as a power of 2, a value generated according to a leading bit of a mantissa field of the weight value, the shift value, and an exponent of the activation value;
apply a sign of the exponent of the activation value to a result of multiplication between the generated conversion value and k; and
generate the exponent of the output data by summing the multiplication result with the sign applied, the exponent of the activation value, the value generated according to the leading bit, and the shift value,
wherein the value generated according to the leading bit corresponds to "-1" when the leading bit has a second value, and the value generated according to the leading bit corresponds to "0" when the leading bit has the first value.

13. The computer-readable storage medium of one of claims 8 to 12, wherein the processing circuitry is further instructed to extract a portion of bits from the result of the operation, and to generate the output data using the extracted portion of bits and the generated exponent.

14. An operating method of a computing apparatus, comprising:
detecting a weight depth field, related to a range of a weight value of a plurality of weight values, within the weight value, detecting an activation depth field, related to a range of an activation value of a plurality of activation values, within the activation value;
identifying a first operand in the weight value, and identifying a second operand in the activation value; and
generating an output value having resultant depth field determined based on the weight depth field and the activation depth field, by performing an operation based on the identified first and second operands.

15. The operating method of claim 14,
wherein the detecting of the weight depth field comprises detecting bits, from a second most significant bit, MSB, of the weight value through a bit that is first to have a first value, as the weight depth field of the weight value, and
wherein the detecting of the activation depth field comprises detecting bits from a second MSB of the activation value through a bit that is first to have the first value, as the activation depth field of the activation value.
